## Europäisches Patentamt

## European Patent Office

## Office européen des brevets

(11) Veröffentlichungsnummer: **0 079 067 B1**

(12) **EUROPÄISCHE PATENTSCHRIFT**

(45) Veröffentlichungstag der Patentschrift:
30.04.86

(21) Anmeldenummer: 82110259.7

(22) Anmeldetag: 06.11.82

(51) Int. Cl.⁴: **B 62 D 33/00**

(54) **Anhänger für Kraftfahrzeuge.**

(30) Priorität: **10.11.81 DE 8132788 U**

(43) Veröffentlichungstag der Anmeldung:
**18.05.83 Patentblatt 83/20**

(45) Bekanntmachung des Hinweises auf die Patenterteilung:
**30.04.86 Patentblatt 86/18**

(84) Benannte Vertragsstaaten:
**BE DE FR NL**

(56) Entgegenhaltungen:
**FR - A - 2 088 044**
**US - A - 2 491 378**

(73) Patentinhaber: **Westfalia-Werke Franz Knöbel & Söhne KG, Am Sandberg 45, D-4840 Rheda-Wiedenbrück (DE)**

(72) Erfinder: **Braun, Dieter, Robert-Schumann-Strasse 6, D-4840 Rheda-Wiedenbrück (DE)**

(74) Vertreter: **Meldau, Gustav, Dipl.-Ing. et al, Patentanwalt Dipl.-Ing. Gustav Meldau Dipl.-Phys. Dr. H.-J. Strauss Postfach 2452, D-4830 Gütersloh 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung bezieht sich auf einen ein- oder tandemachsigen Anhänger für Kraftfahrzeuge mit Kastenaufbau und in Metallrahmen gefaßten Kastenwänden.

Bei derartigen bekannten Anhängern sind an der Rückseite die verschiedenen vorgeschriebenen Kennzeichen und Leuchten derart anzubringen, daß sie fest angeordnet sind und sich neben oder unter einer beweglichen Wand befinden. Im allgemeinen ist die Rückwand eines Kastenanhängers insgesamt beweglich, und zwar entweder nach unten oder nach den Seiten abklappbar, damit der Anhänger be- und entladen werden kann. Bei der vielfach üblichen Anbringung der Kennzeichen und Leuchten, lediglich mit ihrem Gehäuse oder einer Unterlage im Bereich der unteren, hinteren Kante von unten her befestigt, sind diese stark gefährdet, werden oft zerstört oder verbogen. Da es bei einer abklappbaren Rückwand eines kastenförmigen Anhängers erforderlich ist, die Seitenwände im hinteren Bereich seitlich abzustützen, beispielsweise mit einer Runge, schafft die Neuerung eine besonders vorteilhafte Lösung dadurch, daß nach der. Neuerung eine Endtraverse mit Seitenwandstützen kombiniert wird, die Endtraverse ist ausgebildet als tiefgezogenes nach oben offenes U-profil mit abstehenden Befestigungsflanschen zur Befestigung an der Bodenunterseite des Anhängers an den oberen U-profil Kanten sowie seitlich über die Breite des Kastens überstehenden U-Profil zum Aufsetzen der Seitenwandstützen, die ebenfalls aus einem tiefgezogenen im Horizontalschnitt in der Draufsicht gesehen -U-förmigen Profil gebildet sind, mit unterem und oberem Abschluß und mittels einer Schraube von unten, zwei Schrauben durch die Seitenschenkel nahe der Oberkante der Endtraverse mit dieser verbunden sind und mittels mindestens einer Schraube nahe dem oberen Ende der Seitenwandstütze mit dem Rahmen der Seitenwand verbunden sind.

Vorteilhaft erweise ist die Endtraverse in ihrer Vorderwand mit einer oder mehreren sickenförmigen Auswölbungen versehen. Sie ist zweckmäßig erweise in ihrer Rückwand mit einer oder mehreren, fensterartigen Durchbrechungen versehen. Die Auswölbungen und Durchbrechungen dienen zur Aufnahme von Rücklichtern und weiteren Leuchten.

Die Endtraverse ist an ihrer vorderen Oberkante einschließlich des Befestigungsprofiles mit einer Einwölbung in Form einer Kerbe als Kabeldurchlaß versehen. Weiterhin ist die Endtraverse vorteilhaft erweise an ihrer hinteren Unterkante mit einer nach außen vorspringenden, leistenförmig durchgehenden Auswölbung versehen.

Die Seitenwandstützen sind an ihrem unteren Ende an der Hinterkante mit angeformten Auswölbungen versehen, die die Auswölbungen der Endtraverse formschlüssig übergreifen.

Weiterhin können die Seitenwandstützen zweckmäßig erweise in ihrer, den Querstrich des U-Profil bildenden Außenwand mit einer oder mehreren Einsickungen versehen sein, die vorzugsweise längs durchgehend ausgebildet sind. Die Einsickung der Seitenwandstützen im Bereich der oberen Befestigungsschraube ist zweckmäßig erweise als zur Seitenwand paralleler Sitz für den Schraubenkopf ausgebildet. Oberhalb der Verbindung mit der Endtraverse sind die Seitenwandstützen vorteilhaft erweise mit stetig verringertem Querschnitt abgeschrägt.

Nach der Erfindung ist eine Endtraverse unterhalb der Unterkante des Anhängerkastens vorgesehen, durch die die Festigkeit und Steifigkeit der gesamten Konstruktion verbessert wird. Auf diese Endtraverse sind an beiden Seiten formschlüssig und kraftschlüssig Seitenstützen für die Wände aufgesetzt, so daß sich am hinteren Teil des Anhängerkastens nicht nur eine untere, sondern auch eine seitliche Verstärkung und Versteifung ergibt. Die Endtraverse ist gleichzeitig derart ausgebildet, daß sie zur Aufnahme sämtlicher Beleuchtungen und Kennzeichen zu verwenden ist. Dazu ist sie mit Sicken und Durchbrüchen versehen, die teilweise die Festigkeit verbessern. Durch die Verbindung der Endtraverse mit den Seitenstützen ist gleichsam ein geschlossener, die hintere Rückwand umgebender Körper vorhanden, der bis nahe an die Oberkante des Kastenaufbaus reicht und darüber im wesentlichen Raum läßt für die Verriegelungen der Rückwand. Dieser geschlossene Körper wirkt auch formschön.

Die Erfindung wird nachstehend anhand eines Ausführungsbeispiels mit Bezug auf die Zeichnungen näher erläutert. In den Zeichnungen zeigen:
Fig. 1 perspektivische Ansicht eines Anhängers für Kraftfahrzeuge,
Fig. 2 die Rückansicht der Endtraverse,
Fig. 3 eine Draufsicht auf die Endtraverse,
Fig. 4 die Rückansicht einer Seitenstütze,
Fig. 5 die Seitenansicht einer Seitenstütze,
Fig. 6 einen Schnitt entlang der Linie VI-VI der Fig. 5,
Fig. 7 einen Schnitt entlang der Linie VII-VII der Fig. 5,
Fig. 8 einen Schnitt durch den unteren Teil der Seitenstütze, aufgesetzt auf die Traverse,
Fig. 9 einen waagerechten Schnitt entlang der Linie IX-IX der Fig. 8.

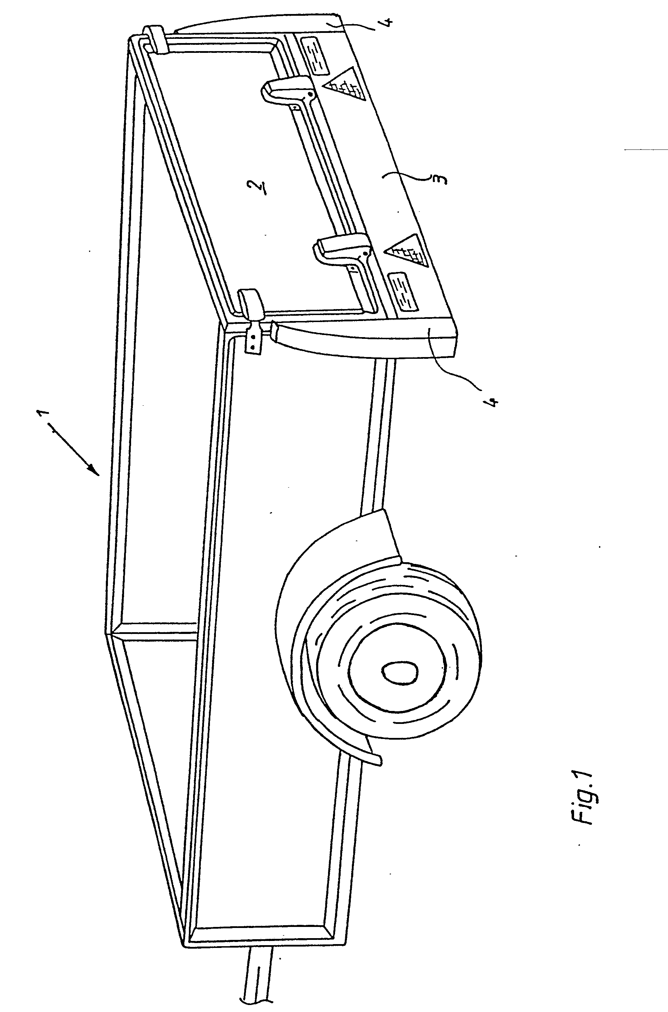

Bei dem in Figur 1 perspektivisch dargestellten Anhänger mit Kastenaufbau 1 ist die Rückwand 2 nach unten abklappbar. Unterhalb der Rückwand befindet sich eine Endtraverse 3, an der an beiden Seiten Seitenstützen 4 befestigt sind.

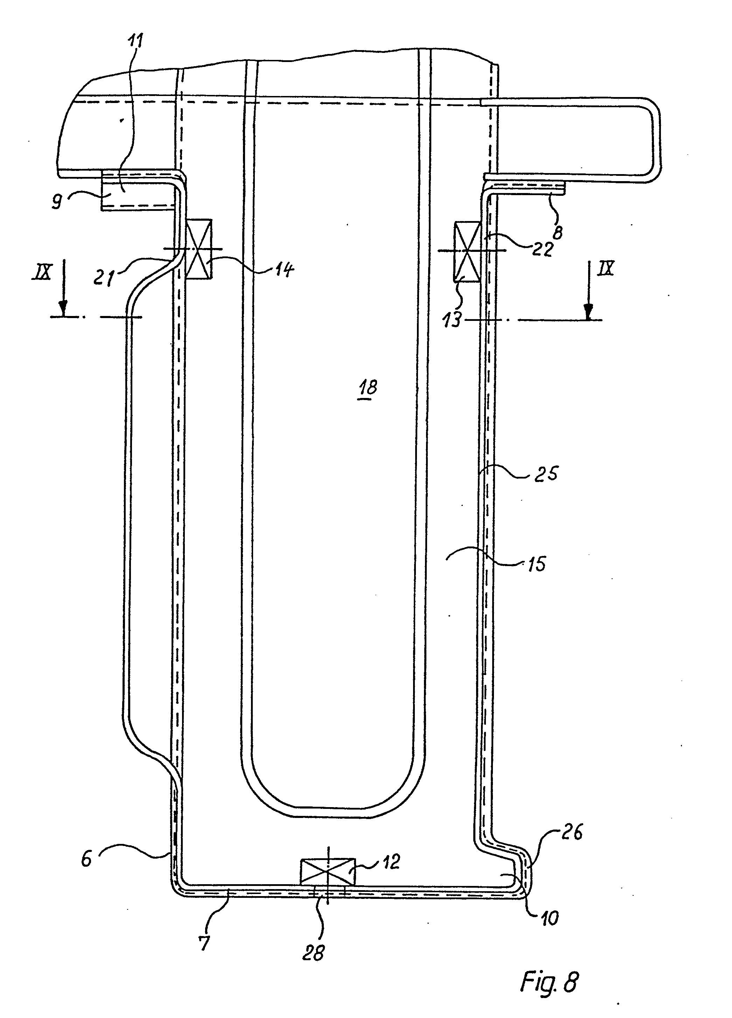

Das eigentliche Profil der Endtraverse ist aus Fig. 8 zu erkennen. Es handelt sich um ein U-Profil mit einem die Basis bildenden Mittelteil 7 und zwei seitlichen Schenkeln 5 und 6, an deren oberen Kanten nach außen abgewinkelte Flanschen 8 und 9 anschließen. Am Übergang vom Mittelteil 7 zum hinteren Schenkel 5 ist eine ausgewölbte Rinne oder Leiste derart gebildet, daß der Mittelteil 7 über die Ebene des Schenkels 5 nach hinten hinaus verlängert ist, dann nach oben abgewinkelt und wieder auf den Schenkel 5 zurückgebogen ist. Diese ausgewölbte Leiste I0 dient zur Verstärkung und Versteifung sowie zum formschlüssigen Anschluß der Seitenwandstützen, wie später erläutert wird. Die oberen Flanschen 8 und 9 sind in Abständen mit Befestigungslöchern zum Anschrauben unter dem Boden bzw. Bodenrahmen des Anhängers versehen.

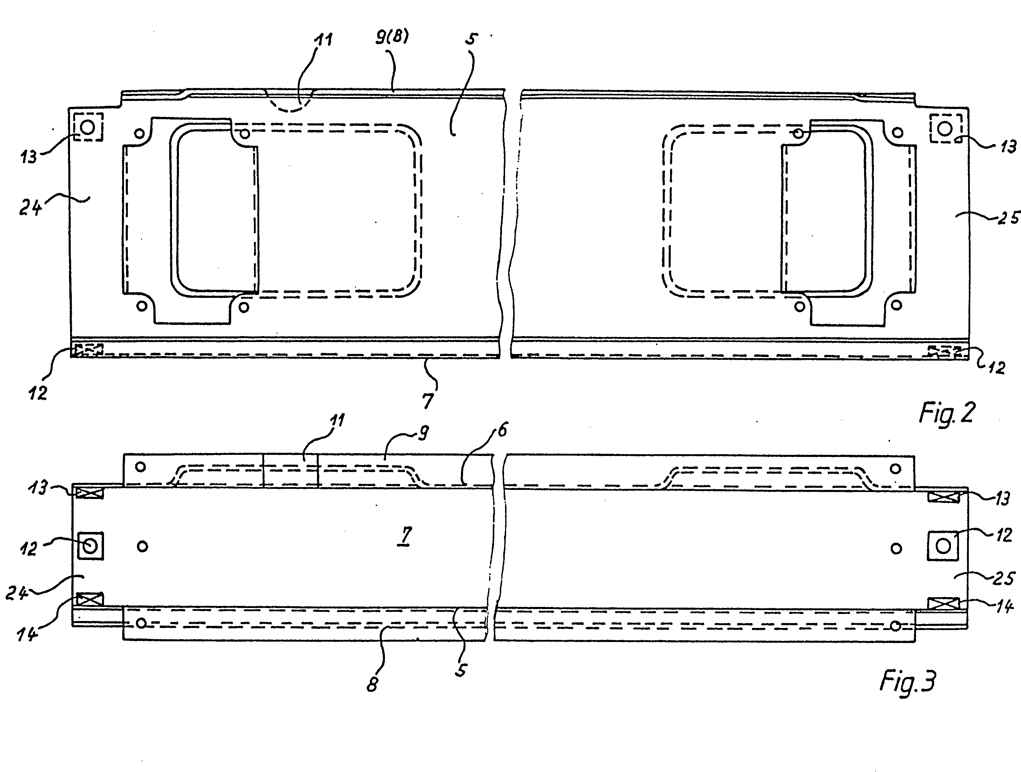

Aus den Figuren 2 und 3 geht hervor, daß die Endtraverse auf ihrer Rückwand, entsprechend dem Schenkel 6, mit Einsickungen versehen ist, die im wesentlichen Schalenform haben. Diese Einsickungen dienen zur Verstärkung der Versteifung des Profils, sie sind jedoch derart angeordnet und ausgebildet, daß sie auch zur Aufnahme der Rückleuchten verwendbar sind. Ihnen gegenüber liegen in der Rückwand,die durch den Schenkel 5 des U-Profils gebildet ist, Durchbrechungen, in die die Leuchten bzw. die Abdeckgläser der Leuchten einzuschrauben sind.

Auf der Oberkante der Vorderwand, entsprechend dem Schenkel 6 des U-Profils, ist in dem Flansch 9 einschließlich eines Teils der den Schenkel bildenden Wandung eine Einkerbung 11 eingeformt, die zum Durchlaß des Zuführungskabels zu den in der Endtraverse untergebrachten Leuchten dient.

Die Flanschen 8 und 9 enden im Abstand vor dem Ende des U-Profils der Endtraverse und in dem überstehenden Bereich des U-Profils ist in dem unteren Mittelteil 7 eine Schweißmutter 12 in der Mitte mit einer Lochung angeordnet, und nahe unter den Flanschen 8 und 9 sind auf der Innenseite der beiden Schenkel in diesem überstehenden Teil ebenfalls Schweißmuttern 13 und 14 mit durchgehenden Löchern angeordnet. Diese Muttern dienen zum Befestigen der auf die beiden Enden der Endtraverse aufgesteckten Seitenwandstützen, wie nachstehend beschrieben wird.

Die Seitenwandstützen 4 bestehen aus tiefgezogenem, verzinktem Stahlblech und sind im wesentlichen in Form eines U-Profils ausgebildet, mit einem mittleren Teil 15 und davon einerseits hochstehenden Schenkeln 16 und 17. Das mittlere Teil ist über annähernd die gesamte Länge zu einer Sicke 18 eingezogen. Im oberen Ende ist die Sicke vertieft zu einem Sitz 19, dessen Ebene parallel zu der Auflageebene der Seitenwandstütze und damit zur Seitenwand verläuft. In diesem Sitz 19 ist ein Durchgangsloch 20 für eine Befestigungsschraube vorgesehen.

Weitere Durchgangslöcher 21 und 22 sind seitlich in den beiden Schenkeln 17 und 16, einander etwa gegenüberliegend, im Bereich des oberen Endes eines Abschnittes 23 vorgesehen. Dieser Abschnitt 23 korrespondiert mit der Höhe der Endtraverse sowie mit ihrem Profil. Die Durchgangslöcher 21 und 22 liegen weiterhin fluchtend mit den Durchgangslöchern in der Endtraverse, die den Schweißmuttern 13 und 14 zugeordnet sind, wenn die Seitenwandstützen auf die flanschlosen Endteile 24 und 25 der Endtraverse aufgeschoben sind, wie das in den Figuren 8 und 9 im senkrechten und im Querschnitt erkennbar ist. Der ausgewölbten Leistenform I0 am unteren, hinteren Ende der Endtraverse entspricht eine Auswölbung 26. an den hinteren, unteren Kanten der Schenkel 16 der Seitenwandstützen, so daß beim Aufschieben dieser Seitenwandstützen auf die flanschlosen Enden der Endtraverse 25 und 24 die Seitenwandstützen auch formschlüssig, teilweise gehalten werden.

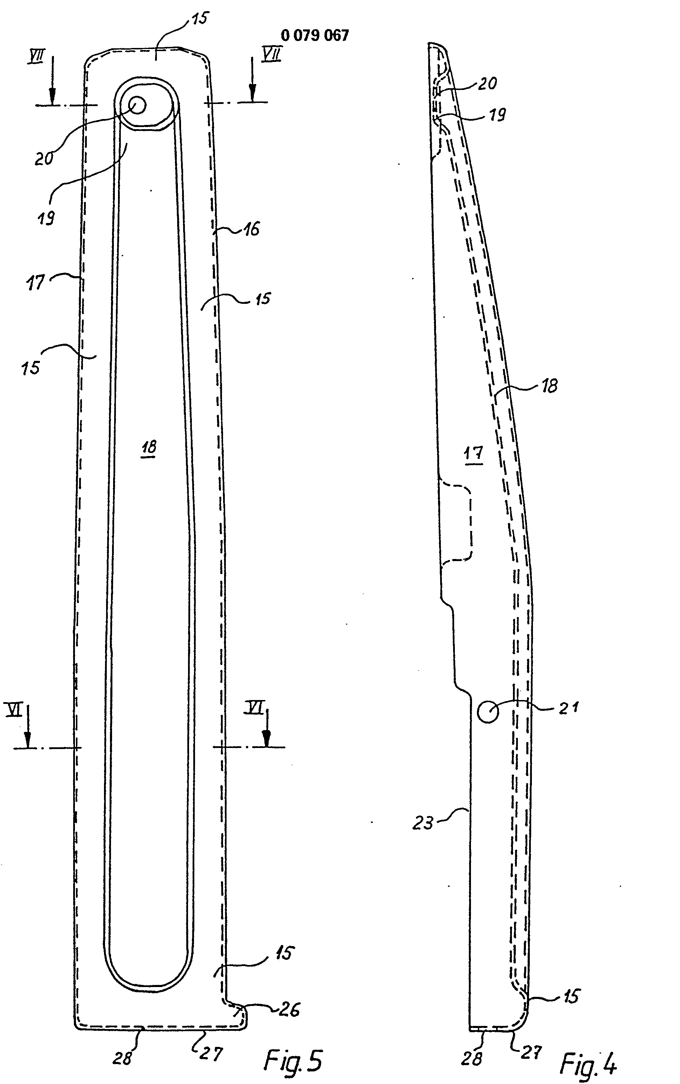

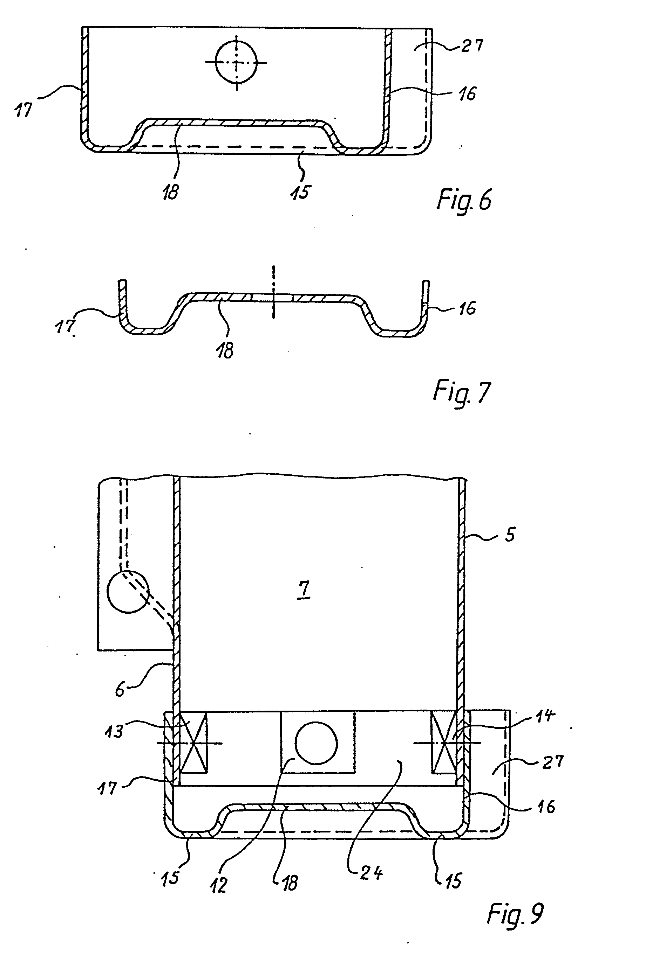

Die Seitenwandstützen sind am oberen und am unteren Ende geschlossen ausgeführt, d.h. die Wandungen sind dort bis in die Ebene der Auflage umgebogen und vorgeführt. In der unteren Abschlußwandung 27 ist ein Durchgangsloch 28 vorgesehen, das, im aufgeschobenen Zustand der Seitenwandstütze, korrespondiert mit dem Durchgangsloch der Endtraverse, die der Schweißmutter 12 zugeordnet ist. Nach dem Aufschieben der Seitenwandstützen werden diese befestigt von Schrauben, die in die Schweißmuttern 12, 13 und 14 eingeschraubt werden. Am oberen Ende der Seitenwandstütze wird dann eine Schraube durch das Durchgangsloch 20 in die Seitenwand bzw. ein dort vorhandenes Durchgangsloch eingesetzt und ebenfalls mit einer Gegenmutter befestigt. Es kann sich dabei um eine Linsenkopfschraube handeln, die von der Innenseite nach außen durchgesetzt ist und mit einer Mutter befestigt ist, die in der Einsenkung 19 nach allen Seiten hin in der Höhe überdeckt ist. Am oberen Ende der Seitenwandstützen sind diese ebenfalls geschlossen, indem das Material zur Auflage hin durchgeführt bzw. eingesenkt ist. Nach einer vorteilhaften Ausführungsform sind die Seitenwandstützen derart ausgebildet, daß sie oberhalb der Befestigung an der Endtraverse mit abnehmender Höhe der Schenkel und/oder auch mit abnehmender Breite ausgeführt sind, so daß sich eine Verringerung der Profilhöhe ergibt, wie sie insbesondere aus Figur 4 und den Figuren 6 und 7 erkennbar ist.

Vorteilhaft erweise sind sämtliche tiefgezogenen Teile, die Endtraverse und die Seitenwandstützen aus sendzimier-verzinktem Eisenblech hergestellt, das beim Tiefziehen dieser Teile besondere Vorteile bietet und weiterhin den hervorragenden Vorteil hat, daß eine besondere, schützende Oberflächenbeschichtung nicht mehr erforderlich ist.

**Patentansprüche**

1. Ein- oder tandemachsiger Anhänger für Kraftfahrzeuge mit Kastenaufbau und in Metallrahmen gefaßten Kastenwänden, gekennzeichnet durch eine Endtraverse (3) mit Seitenwandstützen (4), die Endtraverse ausgebildet als tiefgezogenes, nach oben offenes U-Profil mit abstehenden Befestigungsflanschen (8 und 9) zur Befestigung an der Bodenunterseite des Anhängers an den oberen U-Profil. Kanten sowie seitlich über die Breite des Kastens überstehendem U-Profil (24,25) zum Aufsetzen der Seitenwandstützen (4), die ebenfalls aus einem tiefgezogenen im Horizontalschnitt in der Draufsicht gesehen -U-förmigen Profil gebildet sind, mit unterem und oberem Abschluß (27) und mittels einer Schraube von unten, zwei Schrauben durch die Seitenschenkel (16 und 17) nahe der Oberkante der Endtraverse (3) mit dieser verbunden sind und mittels mindestens einer Schraube nahe dem oberen Ende der Seitenwandstütze (4) mit dem Rahmen der Seitenwand verbunden sind.

2. Anhänger nach Anspruch 1, dadurch gekennzeichnet, daß die Endtraverse (3) in ihrer Vorderwand (6) mit einer oder mehreren sickenförmigen Auswölbungen versehen ist.

3. Anhänger nach Anspruch 1, dadurch gekennzeichnet, daß die Endtraverse (3) in ihrer Rückwand (5) mit einer oder mehreren fensterartigen Durchbrechungen versehen ist.

4. Anhänger nach Anspruch 2 und 3, dadurch gekennzeichnet, daß die Auswölbungen und Durchbrechungen zur Aufnahme von Rücklichtern und weiteren Leuchten ausgebildet sind.

5. Anhänger nach einem der vorstehenden Ansprüche 1 bis 4, dadurch gekennzeichnet, daß die Endtraverse (3) an ihrer vorderen Oberkante einschließlich des Befestigungsprofils (9 und 6) mit einer Einwölbung (11) in Form einer Kerbe als Kabeldurchlaß versehen ist.

6. Anhänger nach Anspruch 1, dadurch gekennzeichnet, daß die Endtraverse (3) an ihrer hinteren Unterkante mit einer nach außen vorspringenden, leistenförmig durchgehenden Auswölbung (10) versehen ist.

7. Anhänger nach einem der vorstehenden Ansprüche,1 bis 6 dadurch gekennzeichnet, daß die Seitenwandstützen (4) an ihrem unteren Ende an der Hinterkante mit angeformten Auswölbungen (10) versehen sind, die die Auswölbungen (10) der Endtraverse (3) formschlüssig übergreifen.

8. Anhänger nach einem der vorstehenden Ansprüche,1 bis 7 dadurch gekennzeichnet, daß die Seitenwandstützen (4) in ihrer den Querstrich des U-Profils bildenden Außenwand (15) mit einer oder mehreren Einsickungen (18) versehen sind, die vorzugsweise längs durchgehend ausgebildet sind.

9. Anhänger nach Anspruch 8, dadurch gekennzeichnet, daß die Einsickung (18) der Seitenwandstütze (4) im Bereich der oberen Befestigungsschraube als zur Seitenwand paralleler Sitz (19) für den Schraubenkopf ausgebildet ist.

10. Anhänger nach einem der vorstehenden Ansprüche 1 bis 9, dadurch gekennzeichnet, daß die Seitenwandstütze (4) oberhalb der Verbindung mit der Endtraverse (3) mit stetig verringerndem Querschnitt abgeschrägt ist.

11. Anhänger nach einem der vorstehenden Ansprüche 1 bis 10, dadurch gekennzeichnet, daß die Endtraverse (3) und die Seitenwandstützen (4) als tiefgezogene Teile aus verzinktem Stahlblech bestehen.

## Claims

1. Single- or double-axle trailer for motor vehicles having a box-type design and box walls contained in metal frames, characterized by that an end girder (3) with side wall supports (4) is provided, the end girder being designed as deep-drawn U section being open at top and having mounting flanges (8 and 9) at the upper U-section edges for mounting on the bottom of the trailer floor and having a U section (24, 25) laterally protruding over the width of the box for putting-on the side wall supports (4), being designed also as deep-drawn U section - when seen in the horizontal section in top view -, having an upper and a lower end cover (27) and being connected by means of a screw from below, two screws through the side thighs (16 and 17) near the upper edge of the end girder (3) to the latter and by means of at least one screw near the upper end of the side wall support (4) to the frame of the side wall.

2. Trailer according to claim 1, characterized by that the end girder (3) is provided in its front wall (6) with one or more bead-type outward curvatures.

3. Trailer according to claim 1, characterized by that the end girder (3) is provided in its rear wall (5) with one or more window-type break-throughs.

4. Trailer according to claims 2 and 3, characterized by that the outward curvatures and break-throughs are designed for accommodating rear lights and further lights.

5. Trailer according to one of the preceding claims, characterized by that the end girder (3) is provided at its upper front edge inclusive the mounting section (9 and 6) with an inward curvature in form of a groove as cable passage.

6. Trailer according to claim 1, characterized by that the end girder (3) is provided at its lower rear edge with an outward curvature (10) projecting outward and being of strip-type design.

7. Trailer according to one of the preceding claims 1 to 6, characterized by that the side wall supports (4) are provided at their lower ends at the rear edge with integrated outward curvatures (10), being in positive engagement with the outward curvatures (10) of the end girder (3).

8. Trailer according to one of the preceding claims 1 to 7, characterized by that the side wall supports (4) are provided in their outside wall (15) forming the serif of the U section with one ore more beads (18) being preferably designed as passing through.

9. Trailer according to claim 8, characterized by that the bead (18) of the side wall support (18) is designed in the range of the upper mounting screw as parallel seat (19) to:the side wall for the screw head.

10. Trailer according to one of the preceding claims 1 to 9, characterized by that the side wall support (4) is sloped with continuously decreasing cross section above the connection to the end girder (3).

11. Trailer according to one of the preceding claims 1 to 10, characterized by that the end girder (3) and the side wall supports (4) are deep-drawn parts made from zincplated sheet steel.

## Revendications

1. Remorque à un seul essieu ou à essieu tandem, équipant des véhicules automobiles et à réalisation du type caisse dont les parois sont enchâssées dans des encadrements métalliques, caractérisée par une traverse extrême (3) comportant des soutiens (4) des parois latérales, cette traverse extrême étant réalisée en tant que profil enU ouvert vers le haut, venu d'emboutissage profond et muni d'ailes de fixation en saillie (8 et 9), un profil en U (24, 25), saillant au-delà des arêtes supérieures du profil en U et latéralement sur la largeur de la caisse, permettant la mise en place des soutiens (4) des parois latérales, lesquels sont également réalisés en tant que profil embouti en profondeur, à configuration en U observé en plan et en coupe horizontale et à obturation inférieure et supérieure (27), en étant reliés à la traverse extrême (3) de bas en haut au moyen d'une vis,et de deux vis traversant les branches latérales (16 et 17) à proximité de 1'arête superieure de ladite traverse extrême, et reliés à l'encadrement de la paroi latérale à l'aide d'au moins une vis, à proximité de l'extrémité supérieure du soutien (4) de paroi latérale.

2. Remorque selon la revendication 1, caractérisée par le fait que la traverse extrême (3) est pourvue, dans sa paroi antérieure (6), d'un ou de plusieurs bombements en forme de nervures.

3. Remorque selon la revendication 1, caractérisée par le fait que la traverse extrême (3) est percée, dans sa paroi postérieure (5), d'un ou de plusieurs évidements en forme de fenêtres.

4. Remorque selon les revendications 2 et 3, caractérisée par le fait que les bombements et les évidements sont réalisés en vue de recevoir des phares de recul et autres lanternes.

5. Remorque selon l'une des revendications précédentes 1 à 4, caractérisée par le fait que la traverse extrême (3) est munie, sur son arête supérieure antérieure englobant le profil de fixation (9 et 6), d'une saillie rentrante (11) se présentant sous la forme d'une encoche en tant que passe-câble.

6. Remorque selon la revendication 1, caractérisée par le fait que la traverse extrême (3) est dotée, sur son arête inferieure postérieure, d'une protubérance ininterrompue (10) en forme de barrette faisant saillie vers l'extérieur.

7. Remorque selon l'une des revendications précédentes 1 à 6, caractérisée par le fait que les soutiens (4) des parois latérales présentent, sur l'arête postérieure de leur extrémité inférieure, des bombements solidaires (26) qui coiffent par concordance de formes les protubérances (10) de la traverse extrême (3).

8. Remorque selon l'une des revendications précédentes 1 à 7, caractérisée par le fait que les soutiens (4) des parois latérales comportent, dans leur paroi externe (15) constituant la barre transversale du profil en U, une ou plusieurs nervures rentrantes (18) réalisées, de préférence, ininterrompues longitudinalement.

9. Remorque selon la revendication 8, caractérisée par le fait que la nervure rentrante (18) du soutien (4) de paroi latérale est réalisée, au.voisinage de la vis supérieure de fixation, en tant que logement (19) pour la tête de la vis,orienté parallélement à la paroi latérale.

10. Remorque selon l'une des revendications précédentes 1 à 9, caractérisée par le fait que le soutien (4) de paroi latérale posséde, au-dessus de la liaison avec la traverse extrême (3), une inclinaison à diminution permanente de section.

11. Remorque selon l'une des revendications précédentes 1 à 10, caractérisée par le fait que la traverse extrême (3) et les soutiens (4) des parois latérales se présentent sous la forme de pièces en tôle d'acier zinguée, embouties en profondeur.

Fig.1

0 079 067

Fig.2

Fig.3

3

Fig. 5

Fig. 4

Fig. 6

Fig. 7

Fig. 9

Fig. 8